# EUROPEAN PATENT APPLICATION

(11) **EP 4 432 005 A1**
(43) Date of publication of application: **18.09.2024**
(21) Application number: 22890319.1
(22) Date of filing: 01.11.2022
(51) Int. Cl.: G02F 1/1335, G02F 1/1333

(54) **OPTICAL LAMINATE AND MANUFACTURING METHOD THEREFOR, SMART WINDOW COMPRISING SAME, AND VEHICLE AND BUILDING WINDOW AND DOOR USING SAME**

(30) Priority: 08.11.2021 KR 20210152322
(71) Applicant: Dongwoo Fine-Chem Co., Ltd., Iksan-si, Jeollabuk-do 54631 (KR)
(72) Inventor: AHN, Hong-Jun, Seoul 06593 (KR); KIM, Dong-Hwi, Sejong 30100 (KR); OH, Pyoung-Yun, Pyeongtaek-si, Gyeonggi-do 17809 (KR); JUNG, Sung-Hoon, Yongin-si, Gyeonggi-do 16873 (KR)
(74) Representative: Betten & Resch
(86) International application number: PCT/KR2022/016881
(87) International publication number: WO 2023/080588

(57) **Abstract**

The present disclosure relates to a transmittance-variable optical laminate including a first polarizing plate, a first transparent conductive layer formed on a first surface of the first polarizing plate, a second polarizing plate arranged to be opposite the first polarizing plate, a second transparent conductive layer formed on a first surface of the second polarizing plate and arranged to be opposite the first transparent conductive layer, and a liquid crystal layer provided between the first transparent conductive layer and the second transparent conductive layer, in which at least one of the first and second transparent conductive layers is in direct contact with either the first polarizing plate or the second polarizing plate, and at least one of the first and second polarizing plates has a single transmittance color b* value of -6.0 to -3.0. The present disclosure relates to a method of manufacturing the transmittance-variable optical laminate, a smart window including the transmittance-variable optical laminate, and automotive and building windows using the transmittance-variable optical laminate.

## Description

### Technical Field

The present disclosure relates to a transmittance-variable optical laminate, a method of manufacturing the same, a smart window including the same, and automotive and building windows using the same.

### Background Art

In general, external light-blocking coating is often applied to the windows of vehicles and other forms of transportation. However, the glass windows of conventional vehicles have a fixed transmittance, and so do the light-blocking coatings. The fixed overall transmittance of the windows of conventional vehicles can cause accidents. For example, when the overall transmittance is low, there is no problem during the day, i.e., when there is plenty of ambient light, whereas at night, i.e., when there is not enough ambient light, the driver may have difficulty seeing the surroundings of the vehicle. Meanwhile, the windows with an overall high transmittance can cause glare for drivers and passengers during the day when there is plenty of ambient light. For this reason, optical laminates having transmittance that is variable according to an application voltage have been developed.

The transmittance-variable optical laminate operates in a manner that liquid crystals change in orientation to change the transmittance of the optical laminate according to an applied voltage. The transmittance-variable optical laminates that have been developed to date are typically manufactured by forming a conductive layer for driving the liquid crystals on a separate substrate and combining the conductive layer with other components, such as a polarizing plate.

For example, Japanese Patent Application Publication No. 2018-010035 discloses a transmittance-variable optical laminate including a transparent electrode layer formed on a polycarbonate (PC) substrate having a predetermined thickness.

However, when the laminate includes the substrate to carry a conductive layer, there are problems, such as an increase in manufacturing costs due to the complexity of manufacturing processes, an increase in the thickness of the laminate, and a change in the transmittance due to phase differences.

On the other hand, the materials used for some transparent electrode layers, such as indium tin oxide (ITO) have an inherent yellowish color value, and the materials cause the phenomenon of a yellowing tint. For this reason, transmittance variable optical laminates, which do not contain a separate backlight unlike conventional display devices, has a problem that it is difficult to display neutral colors, especially in transmissive mode.

Therefore, there is a need to develop a transmittance-variable optical laminate that does not include a substrate to carry the conductive layer because the omission of the separate can simplify the manufacturing processes, reduce the thickness of the optical laminate, and make the optical laminate less prone to a yellowing tint attributable to the inherent color value of the electrode material.

### Disclosure

### Technical Problem

It is an objective of the present disclosure to provide a transmittance-variable optical laminate that adjusts a single transmission color of a polarizing plate to reduce the phenomenon of a specific color tint caused by an electrode material used to form a conductive layer.

It is another objective of the present disclosure to provide a transmittance-variable optical laminate that can be manufactured through a simplified process by not including a separate substrate used to form a conductive layer.

It is a further objective of the present disclosure to provide a transmittance-variable optical laminate having a significantly reduced thickness by not including a separate substrate used to form a conductive layer.

It is a further objective of the present disclosure to provide a transmittance-variable optical laminate having improved transmittance in transmissive mode by not including a separate substrate used to form a conductive layer.

It is a yet further objective of the present disclosure to provide a smart window including the transmittance-variable optical laminate and to provide a vehicle or building window to which the smart window is applied.

The obj ectives to be achieved by the present disclosure are not limited to the ones mentioned above, and other objectives not mentioned above can be clearly understood by those skilled in the art from the following description.

### Technical Solution

The present disclosure relates to a transmittance-variable optical laminate including: a first polarizing plate; a first transparent conductive layer formed on a first surface of the first polarizing plate; a second polarizing plate arranged to be opposite the first polarizing plate; a second transparent conductive layer formed on a second surface of the second polarizing plate and arranged to be opposite the first transparent conductive layer; and a liquid crystal layer provided between the first transparent conductive layer and the second transparent conductive layer, in which at least one of the first and second transparent conductive layers is in direct contact with either the first polarizing plate or the second polarizing plate, and at least one of the first and second polarizing plates has a single transmittance color b* value of -6.0 to -3.0.

In a first aspect of the disclosure, at least one of the first and second polarizing plates may have a single transmittance color b* value of -5 to -3.5.

In a second aspect of the disclosure, at least one of the first and second polarizing plates may include at least one functional layer selected from the group consisting of a protective layer, a phase control layer, and a refractive index control layer.

In a third aspect of the disclosure, at least one of the first and second polarizing plates may have a thickness of 30 to 200 µm.

In a fourth aspect of the disclosure, at least one of the first and second transparent conductive layers may have a thickness of 20 to 70 nm.

In a fifth aspect of the disclosure, at least one of the first and second transparent conductive layers may have a first and second polarizing plates may have a sheet resistance of 30 to 200 Ω/□.

In a sixth aspect of the disclosure, at least one of the first and second transparent conductive layers is formed in direct contact with either of the first and second polarizing plates, without a separate substrate interposed therebetween.

In a seventh aspect of the disclosure, at least one of the first and second transparent conductive layers is formed in direct contact with either of the first and second polarizing plates with the use of an adhesion-aiding layer.

In an eighth aspect of the disclosure, at least one of the first and second transparent conductive layers may include one or more materials selected from the group consisting of transparent conductive oxides, metals, carbon-based materials, conductive polymers, conductive inks, and nanowires.

In a ninth aspect of the disclosure, the liquid crystal layer may include at least one type selected from the group consisting of a ball spacer and a column spacer.

In a tenth aspect of the present disclosure, the ball spacer may have a diameter of 1 to 10 µm.

In an eleventh aspect of the present disclosure, the ball spacer may occupy 0.01% to 10% of the area of the liquid crystal layer.

In a twelfth aspect of the present disclosure, the transmittance-variable optical laminate may further include at least one selected from the group consisting of an orientation film, an adhesive layer, an ultraviolet absorbing layer, and a hard coating layer.

The present disclosure relates to a method of manufacturing a transmittance-variable optical laminate.

The present disclosure relates to a smart window including the transmittance-variable optical laminate.

The present disclosure relates to a vehicle in which the smart window is applied to at least one selected from a front window, a rear window, a side window, a sunroof window, and an interior partition.

The present disclosure relates to a building window including the smart window.

### Advantageous Effects

The transmittance-variable optical laminate according to the present disclosure features that the single transmittance color of the polarizing plates is adjustable, thereby significantly reducing the phenomenon of a yellowing tint attributable to the electrode material compared to conventional optical laminates.

The transmittance-variable optical laminate according to the present disclosure can eliminate some process required by a conventional optical laminate, for example, the processes of forming a conductive layer on a substrate and bonding the substrate to other members, thereby simplifying the manufacturing process thereof.

In addition, since the transmittance-variable optical laminate according to the present disclosure has a structure in which the conductive layer is formed directly on one side of the polarizing plate and thus a separate substrate for forming the conductive layer is not included, the transmittance-variable optical laminate has a significantly reduced thickness compared to a conventional optical laminate.

In addition, since the transmittance-variable optical laminate according to the present disclosure has a structure in which the conductive layer is formed directly on one side of the polarizing plate and thus a separate substrate for forming the conductive layer is not included, the transmittance-variable optical laminate has an improved transmittance in transmissive mode compared to a conventional optical laminate.

### Description of Drawings

FIG. 1 is a diagram illustrating a laminated structure of a transmittance-variable optical laminate according to one embodiment of the present disclosure;
FIG. 2 is a diagram illustrating a laminated structure of a polarizing plate according to one or more embodiments of the present disclosure; and
FIG. 3 is a diagram illustrating a laminated structure of a transmittance-variable optical laminate according to another embodiment of the present disclosure;

### Best Mode

The present disclosure relates to a transmittance-variable optical laminate in which a transparent conductive layer for driving a liquid crystal is directly formed on a first surface of a polarizing plate, without including a separate substrate for forming a conductive layer. This structure can reduce the thickness of the optical laminate, improve the transmittance of the optical laminate in transmissive mode, and prevent a phenomenon such as color casing attributable to an electrode material by adjusting the single transmittance color of the polarizing plate.

The present disclosure relates to a transmittance-variable optical laminate including: a first polarizing plate; a first transparent conductive layer formed on a first surface of the first polarizing plate; a second polarizing plate arranged to be opposite the first polarizing plate; a second transparent conductive layer formed on a second surface of the second polarizing plate and arranged to be opposite the first transparent conductive layer; and a liquid crystal layer provided between the first transparent conductive layer and the second transparent conductive layer, in which at least one of the first and second transparent conductive layers is in direct contact with either the first polarizing plate or the second polarizing plate, and at least one of the first and second polarizing plates has a single transmittance color b* value of -6.0 to -3.0.

The transmittance-variable optical laminate of the present disclosure is particularly suitable for technical applications, such as smart windows, in which the transmittance of light is variable with change in an application voltage.

The term "smart window" refers to an optical structure that controls the amount of light or heat that passes therethrough by changing the transmittance thereof in response to the application of an electrical signal. In other words, the smart window can switch among a transparent state, an opaque state, or a translucent state according to an application voltage, and is also called tinted glass, dimming glass, or smart glass.

The smart window can be used as a partition for compartmentalization or privacy protection in interior spaces of vehicles and buildings or as a skylight placed in an opening in a building. The smart window also can be used as a highway sign, billboard, scoreboard, clock face, or advertising screen, or as an alternative to glass in transportation, such as windows or sunroofs in cars, buses, aircraft, ships, or trains.

The transmittance-variable optical laminate of the present disclosure can also be used as a smart window in many of the technical applications described above. Particularly, since the transmittance-variable optical laminate has a conductive layer formed directly on a polarizing plate, a separate pr additional substrate for forming the conductive layer is not required, which is favorable in terms of thin thickness and bending properties. Therefore, the transmittance-variable optical is particularly suitable for use in automotive or building smart windows. In one or more embodiments, a smart window with the transmittance-variable optical laminate of the present disclosure may be used as a front window, rear window, side window, or sunroof window of a vehicle, or as a window of a building. In addition, the smart window may be used as interior partitions, for example, for interior space compartmentalization or privacy protection purposes, as well as exterior light blocking purposes.

Hereinafter, embodiments of the present disclosure will be described in more detail with reference to the drawings. The drawings attached to the present specification illustrate preferred embodiments of the present disclosure and serve to aid understanding of the spirit of the present disclosure in conjunction with the description herein. Therefore, the present disclosure should not be construed as being limited to those illustrated in the drawings.

The terminology used herein is for describing the embodiments and is not intended to limit the scope of the present disclosure. As used herein, the singular forms "a", "an", and "the" are intended to include the plural forms as well, unless the context clearly indicates otherwise. For example, as used herein, the term "polarizing plate" may refer to at least one of first and second polarizing plates, and the term "transparent conductive layer" may refer to at least one of first and second transparent conductive layers.

It will be further understood that the terms "comprise" and/or "comprising" when used in this specification specify the presence of stated features, regions, integers, steps, operations, elements and/or components, but do not preclude the presence or addition of one or more other features, regions, integers, steps, operations, elements, components and/or groups thereof. Like reference signs refer to like elements throughout the description herein.

The spatially relative terms "below", "lower surface", "under", "above", "upper surface", "on", and the like may be used herein to easily describe the correlation of a device or element and another device or element as illustrated in the drawings. The spatially relative terms should be understood as the terms that include different orientations of devices or elements being in other uses or operation in addition to the orientations illustrated in the drawings. For example, when one device or element illustrated in the drawings is turned over, the device or element described as disposed "below" or "under" a third device or element may be disposed "above" or "on" the third device or element. Accordingly, the exemplary term "below" may include orientations of both below and above. The device may be oriented at other orientations, and the spatially relative terms used herein may be interpreted accordingly.

As used herein, the term "in-plane direction" can be interpreted as the direction orthogonal to a polarizing plate and/or transparent conductive layer, i.e., the direction as viewed from the user's viewing side.

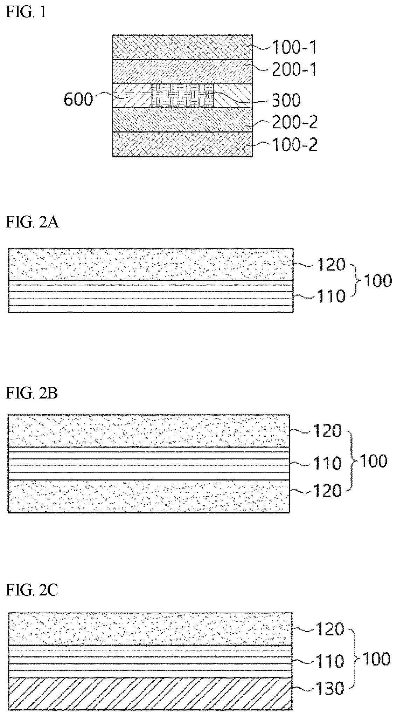

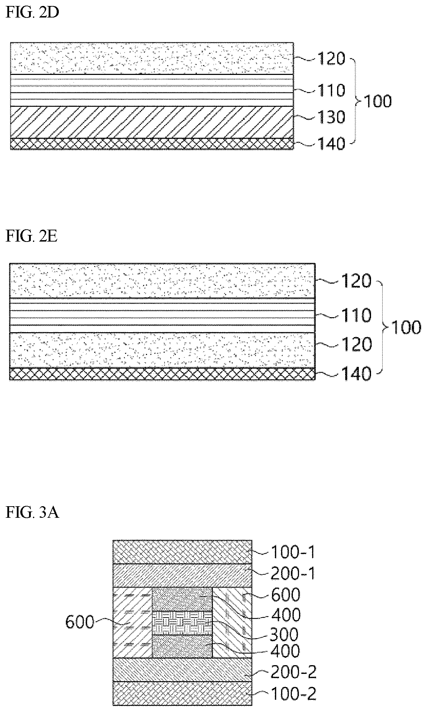

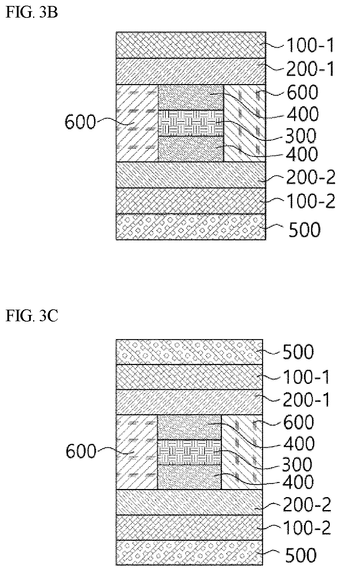

FIG. 1 is a diagram illustrating a laminated structure of a transmittance-variable optical laminate according to one embodiment of the present disclosure, FIG. 2 is a diagram illustrating a laminated structure of a polarizing plate according to one or more embodiments of the present disclosure, and FIG. 3 is a diagram illustrating a laminated structure of a transmittance-variable optical laminate according to another embodiment of the present disclosure.

Referring to FIG. 1, a transmittance-variable optical laminate according to one embodiment of the present disclosure includes a first polarizing plate 100-1, a second polarizing plate 100-2, a first transparent conductive layer 200-1, a second transparent conductive layer 200-2, and a liquid crystal layer 300.

At least one polarizing plate of the first polarizing plate 100-1 and the second polarizing plate 100-2 may have a single transmittance color b* value of -6.0 to -3.0 and preferably -5 to -3.5.

When the single transmittance color value b* of the polarizing plate 100 satisfies the above-mentioned range, it is advantageous in that it is possible to secure a neutral color in transmissive mode of the optical laminate by significantly reducing the phenomenon of a yellowing tint caused by the inherent color value of the transparent conductive layer 200.

As the single transmittance color value b* is increased in the negative (-) direction, the value indicates stronger blue light, whereas the single transmittance color value b* is increased in the positive (+) direction, the value indicates stronger yellow light. Electrode materials, such as indium tin oxide (ITO), which is commonly used for transparent conductive layers, have a positive single transmittance color b* value.

On the other hand, display devices also include a transparent conductive layer for driving liquid crystal molecules. However, since conventional display devices, such as liquid crystal display (LCD) devices use a blue backlight unit (BLU) or a white backlight unit (BLU) as a light source, the phenomenon of a yellowing tint caused by the electrode material is not noticeable to the user.

Therefore, in conventional technologies such as image display device technologies, polarizing plates with a single transmittance color b* value of -1.0 or higher are commonly used to realize appropriate optical properties of image display devices, and polarizing plates with a single transmittance color b* value of -2.5 or lower are regarded to be improper in terms of color reproduction of light sources and increase in power efficiency because they cannot realize appropriate optical properties of image display devices.

However, since the transmittance-variable optical laminate does not include a separate light source unlike conventional display devices, but rather external natural light that passes through the optical laminate acts as a light source, there has been a problem that a yellowing tint is caused by the electrode material when the transmittance-variable optical laminate is manufactured to include a polarizing plate commonly used in the technical field to which the conventional display devices belong.

Accordingly, the inventors of the present disclosure have developed a transmittance-variable optical laminate having a polarizing plate having a single transmittance color b* value of - 6.0 to -3.0, which can significantly reduce the phenomenon of yellowing caused by the electrode material.

On one or more embodiments, the laminated structure of the polarizing plate and transparent conductive layer provided in the transmittance-variable optical laminate may include an upper laminated structure composed of a first polarizing plate 100-1 and a first transparent conductive layer 200-1 and a lower laminated structure composed of a second polarizing plate 100-2 and a second transparent conductive layer 200-2, in which the laminated structure may have a single transmittance color b* value of -1.0 to 1.0, and preferably a single transmittance color b* value of zero. In this case, the described laminate is advantageous in terms of obtaining a neutral color in the transmissive mode of the transmittance-variable optical laminate. In the present disclosure, the neutral color may refer to a color that is not affected by the composition or material of a conductive layer or electrode material that causes a specific color tint.

Referring to FIG. 2, the polarizing plate 100 includes a polarizer 110. In addition, on one or both sides of the polarizer 110, functional layers, such as a protective layer 120, a phase control layer 130, and a refractive index control layer 140 may be provided. For example, the polarizing plate 100 may include a polarizer 110 and a protective layer 120 laminated on one or both sides of the polarizer 110 (see FIGS. 2A and 2B). Alternatively, the polarizing plate 100 may include a polarizer 110, a protective layer 120 laminated on a first surface of the polarizer 110 and a phase control layer 130 laminated on a second surface opposite the first surface of the polarizer 110 (see FIG. 2C). Alternatively, the polarizing plate 100 may include a polarizer 110, a protective layer 120 laminated on a first surface of the polarizer, and a phase control layer 130 and a refractive index control layer 140 laminated in this order on a second surface opposite the first surface of the polarizer 110 (see FIG. 2D). Alternatively, the polarizing plate may include a polarizer 110, a protective layer 120 laminated on a first surface of the polarizer, and a protective layer 120 and a phase control layer 130 laminated in this order on a second surface opposite the first surface of the polarizer 110 (see FIG. 2E).

As the polarizer 110, any existing polarizer or a polarizer that is developed in the future may be used. For example, a stretched polarizer or a coated polarizer may be used.

In one embodiment, the stretched polarizer may contain a stretched polyvinyl alcohol (PVA)-based resin. The polyvinyl alcohol (PVA)-based resin may be a polyvinyl alcohol-based resin obtained by saponifying a polyvinyl acetate resin. The polyvinyl acetate resin may be polyvinyl acetate that is a homopolymer of vinyl acetate or polyvinyl acetate that is a copolymer of vinyl acetate with any other monomer. Examples of the any other monomer include unsaturated carboxylic acid-based monomers, unsaturated sulfonic acid-based monomers, olefin-based monomers, vinyl ether-based monomers, and acrylamide-based monomers having an ammonium group. The polyvinyl alcohol (PVA)-based resin may be a modified form. For example, the PVA-based resin may be polyvinylformal or polyvinylacetal modified with an aldehyde.

In one embodiment, the coated polarizer may be formed by a liquid crystal coating composition. In this case, the liquid crystal coating composition may contain a reactive liquid crystal compound and a dichroic dye or the like.

The reactive liquid crystal compound may refer to a compound including, for example, a mesogenic backbone and one or more polymerizable functional groups. The reactive liquid crystal compounds are known as so-called reactive mesogens (RMs). The reactive liquid crystal compound can be polymerized by light or heat to form a cured film with a polymeric network that maintains the orientation of liquid crystal molecules.

The reactive liquid crystal compound may be a monofunctional or multifunctional reactive liquid crystal compound. The monofunctional reactive liquid crystal compound may refer to a compound having one polymerizable functional group, and the multifunctional reactive liquid crystal compound may refer to a compound having two or more polymerizable functional groups.

The dichroic dye is a component included in the liquid crystal coating composition to impart polarizing properties, in which the absorbance in the long axis direction of the molecule thereof differs from the absorbance in the short axis direction. The dichroic dyes may be any dichroic dyes known in the art or to be developed in the future. For example, examples of the dichroic dye include azo dyes, anthraquinone dyes, perylene dyes, merocyanine dyes, azomethine dyes, phthaloperylene dyes, indigo dyes, dioxadine dyes, polythiophene dyes, and phenoxazine dyes, and the dichoric dye may include one or more selected from the group consisting of phthaloperylene dyes, indigo dyes, dioxadine dyes, polythiophene dyes, and phenoxazine dyes.

The liquid crystal coating composition may further contain a solvent capable of dissolving the reactive liquid crystal compound and the dichroic dye. For example, propylene glycol monomethylether acetate (PGMEA), methyl ethyl ketone (MEK), xylene, and chloroform may be used as the solvent. In addition, the liquid crystal coating composition may further contain a leveling agent, a polymerization initiator, and the like, in an amount that does not impair the polarization properties of a coating film.

The protective layer 120 is intended to preserve the polarization characteristics of the polarizer 110 not to be impaired by post-processing or an external environment, and may be implemented in the form of a protective film or the like.

The protective layer 120 may be formed in direct contact with one or both sides of the polarizer 110, as shown in FIGS. 2A and 2B, but is not limited thereto. For example, the protective layer may be used as a bilayer structure with one or more protective layers stacked, and may be formed in direct contact with other functional layers.

In one or more embodiments, the protective layer 120 may contain at least one selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymers (COP).

The phase control layer 130, which is intended to complement the optical properties of the optical laminate, may be implemented in the form of a phase film or the like, and any existing phase film or any phase film to be developed in the future may be used. For example, quarter-wave plates or half-wave plates can be used to delay the phase of light, and these can be used solely or in combination.

The phase control layer 130 may be formed in direct contact with a first surface of the polarizer 110, as shown in FIGS. 2C and 2D, but is not limited thereto. For example, as shown in FIG. 2E, the phase control layer 130 may be formed on one side of the protective layer 120, such that the polarizer 110, the protective layer 120, and the phase control layer 130 are stacked in sequence.

The phase control layer 130 may be a stretched polymeric film that is obtained by stretching a polymer film to impart optical anisotropy or a liquid crystal polymerized film.

In one embodiment, the stretched polymeric film may be a polymer layer made from: a polyolefin such as polyethylene (PE) or polypropylene (PP); a cyclic olefin polymer (COP) such as polynorbomene; a polyester such as polyvinyl chloride (PVC), polyacrylonitrile (PAN), polysulfone (PSU), acrylic resin, polycarbonate (PC), or polyethylene terephthalate (PET); a cellulose ester polymers such as polyacrylate, polyvinyl alcohol (PVA), or triacetyl cellulose (TAC); or a copolymer of two or more monomers of the monomers forming the above polymers.

The method of obtaining the stretched polymeric film is not particularly limited and may be obtained, for example, by molding one of the above-listed polymers into a film form and then stretching the molded film. The molding method to form a film is not particularly limited, and any known method, such as injection molding, sheet molding, blow molding, injection blow molding, inflation molding, extrusion molding, foam molding, cast molding, and the like may be used. Alternatively, secondary processing molding methods, such as punch molding, vacuum molding, and the like can also be used. Among them, extrusion molding and cast molding are preferably used. For example, an extruder equipped with a T-die, circular die, etc. can be used to form an unstretched film through extrusion molding. When obtaining molded articles by extrusion molding, a molten and kneaded form of various resins, additives, etc. may be prepared before extrusion molding, and then the prepared material may be used for the extrusion molding. Alternatively, such substances may be melted and kneaded during extrusion molding. An unstretched film can also be casted by dissolving various resins using a solvent, such as chloroform, methylene dichloride, and the like, and then solidifying the dissolved resins through cast drying.

The stretched polymeric film can be uniaxially stretched in the mechanical direction (MD), which is also called longitudinal direction or lengthwise direction). The stretched polymeric film can be uniaxially stretched in the transverse direction (TD), which is also called widthwise direction), perpendicular to the mechanical direction (MD). The stretched polymeric film can be biaxially stretched by a sequential biaxial stretching method composed of roll stretching and tenter stretching a simultaneous biaxial stretching method using tenter stretching a biaxial stretching method using tubular stretching, and the like.

The liquid crystal polymerized film may contain a reactive liquid crystal compound in a polymerized state. For the reactive liquid crystal compound, the same description about the reactive liquid crystal compounds of the coated polarizers described above can be referred.

In one or more embodiments, the thickness of the phase control layer 130 may be in a range of 10 µm to 100 µm when the phase control layer is made of a stretched polymeric film, or an range of 0.1 µm to 5 µm when the phase control layer 130 is made of a liquid crystal polymerized film.

The refractive index control layer 140 is provided to compensate for a difference in the refractive index of the optical laminate caused due to the transparent conductive layer 200, and may play a role in improving visual properties by reducing the difference in refractive index. In addition, the refractive index control layer 140 may be provided to correct the color attributable to the presence of the transparent conductive layer 200. On the other hand, when the transparent conductive layer has a pattern, the refractive index control layer 140 can compensate for the difference in transmittance between patterned and non-patterned regions.

Specifically, the transparent conductive layer 200 is laminated adjacent to a member (e.g., polarizer 110, etc.) having a different refractive index from the transparent conductive layer 200, and the difference in refractive index from the adjacent layer may cause a difference in light transmittance. When the transparent conductive layer is patterned, there is a problem that patterned and non-patterned regions are visible as being distinguished. Therefore, the refractive index control layer 140 is provided to compensate for the difference in refractive index so that the difference in the light transmittance in the optical laminate can be reduced. Particularly, when the transparent conductive layer is patterned, the refractive index control layer 140 makes the patterned area and the non-patterned area visible as not being distinguished.

In one embodiment, the refractive index of the refractive index control layer 140 may be suitably selected depending on the material of an adjacent member, but it may be in a range of 1.4 and 2.6, more preferably in a range of 1.4 and 2.4. In this case, it is possible to eliminate light loss attributable to a sharp difference in refractive index between the transparent conductive layer 200 and other members such as the polarizer 110.

The refractive index control layer 140 may be formed from a refractive index control layer forming composition including a polymeric isocyanate compound, without particular limitation. Any conventional compound or any compound to be developed in the future can be used, provided that it is capable of preventing a sharp difference in refractive index between the polarizer 110 and the transparent conductive layer 200.

In one embodiment, the polarizing plate 100 may further include other functional layers to aid or enhance the properties of the polarizer, such as, for example, an overcoat layer to enhance mechanical durability, as well as the above-mentioned functional layers.

In one or more embodiments, the polarizing plate 100 may have a thickness of 30 to 200 µm, preferably 30 to 170 µm, and more preferably 50 to 150 µm. In this case, the polarizing plate 100 can be fabricated as an optical laminate with a small thickness and undeteriorated optical properties.

The transparent conductive layer 200, which is provided to drive the liquid crystal layer 300, may be formed in direct contact with the polarizing plate 100. For example, as shown in FIG. 1, the first transparent conductive layer 200-1 and the second transparent conductive layer 200-2 may be formed in direct contact with the first polarizer 100-1 and the second polarizer 100-2, respectively.

Conventional optical laminates used to manufacture conventional smart windows and the like are manufactured by forming a conductive layer for driving liquid crystals on one side of a substrate and bonding the other side of the substrate with a polarizing plate. However, the transmittance-tunable optical laminate according to the present disclosure is characterized in that it does not include a separate substrate for forming a conductive layer thereon, but it includes the conductive layer directly formed on one side of the polarizing plate, so that the transmittance and bending properties in transmissive mode can be improved, and the thickness of the laminate can be reduced.

In one embodiment, the transparent conductive layer 200 may be formed by direct deposition on a first surface of the polarizing plate 100. In this case, the transparent conductive layer 200 may be formed in direct contact with a pretreated surface of the polarizing plate 100 after a pretreatment such as a corona treatment or a plasma treatment is performed on a first surface of the polarizing plate 100 so that adhesion with the polarizing 100 can be improved. The pretreatment process is not limited to corona treatment or plasma treatment, and any conventional or to-be-developed pretreatment process may be used, provided that it does not prevent the achievement of the objective of the present disclosure.

In other embodiments, the transparent conductive layer 200 may be formed in direct contact with the polarizing plate 100, with an adhesion-aiding layer (not shown) provided on the first surface of the polarizing 100 to improve adhesion to the polarizing plate 100.

The transparent conductive layer 200 preferably has a transmittance of at least 50% for visible light, and may include, for example, one or more types selected from the group consisting of transparent conductive oxides, metals, carbon-based materials, conductive polymers, conductive inks, and nanowires, and more preferably include a transparent conductive oxide.

In one or more embodiments, the transparent conductive oxides may include at least one selected from the group consisting of indium tin oxide (ITO), indium zinc oxide (IZO), indium zinc tin oxide (IZTO), aluminum zinc oxide (AZO), gallium zinc oxide (GZO), fluorine tin oxide (FTO), and zinc oxide (ZnO). The metals may include at least one selected from the group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), and alloys thereof. For example, the metals may include a silver-palladium-copper (APC) alloy or a copper-calcium (CuCa) alloy. The carbon-based materials may include at least one selected from the group consisting of carbon nanotubes (CNTs) and graphene, and the conductive polymers may include at least one selected from the group consisting of polypyrrole, polythiophene, polyacetylene, PEDOT, and polyaniline. The conductive inks may be a mixture of a metal powder and a curable polymeric binder, and the nanowires may be, for example, silver nanowires (AgNWs).

The transparent conductive layer 200 may be formed in the form of a bilayer or multilayer structure by using the above materials in combination. For example, it can be formed as a bilayer structure including a metal layer and a transparent conductive oxide layer to reduce the reflectivity of incident light and to increase the transmittance.

In one embodiment, the transparent conductive layer 200 may have a thickness of 20 to 70 nm, preferably, a thickness of 25 to 65 nm, and more preferably, a thickness of 30 to 60 nm.

When the thickness of the transparent conductive layer 200 satisfies the above-mentioned range, the transparent conductive layer 200 has a sheet resistance value suitable for driving the transmittance-variable optical laminate, and the optical laminate can easily display a neutral color.

In one embodiment, the transparent conductive layer 200 may have a sheet resistance value of 30 to 280 Ω/□, and preferably, a sheet resistance value of 50 to 255 Ω/□.

When the sheet resistance value of the transparent conductive layer 200 satisfies the above-mentioned range, there are advantages that the transmittance-variable optical laminate can be easily driven by the transparent conductive layer, and the thickness of the transparent conductive layer 200, which is easy to secure a neutral color of the optical laminate, can be easily achieved.

The transparent conductive layer 200 may be formed by any method conventionally used in the art. For example, the transparent conductive layer 200 may be formed by: a coating method such as a spin coating method, a roller coating method, a bar coating method, a dip coating method, a gravure coating method, a curtain coating method, a die coating method, a spray coating method, a doctor coating method, a kneader coating method, and the like; a printing process, such as a screen printing process, a spray printing process, an inkjet printing process, an intaglio printing process, a gravure printing process, and a flatbed printing process; or a deposition process, such as chemical vapor deposition (CVD), physical vapor deposition (PVD), and plasma enhanced chemical vapor deposition (PECVD).

The liquid crystal layer 300 can change the driving mode of the optical laminate by adjusting the transmittance of light incident in one or more directions, depending on an electric field.

The liquid crystal layer 300 may contain a liquid crystal compound and may be located within a space provided by, for example, a sealant 600 and spacers (not shown) provided between the first polarizing plate 100-1 and the second polarizing plate 100-2 in a light control region.

The liquid crystal compound is not particularly limited if it is driven by an electric field and is capable of controlling the optical transmittance, and any liquid crystal compound conventionally known or to be developed in the future may be used. For example, the above same description about the reactive liquid crystal compound of the coated polarizer can be referred.

The behavior of the liquid crystals of the liquid crystal layer 300 is not particularly limited. For example, twisted nematic (TN) mode, super twisted nematic (STN) mode, vertical alignment (VA) mode, and the like may be used.

The sealant 600 may include a curable resin as a base resin. As the base resin, a UV-curable resin or a thermosetting resin known in the art to be used for sealant 600 can be used. The UV-curable resin may be a polymer of UV-curable monomers. The thermosetting resin may be a polymer of thermosetting monomers.

As the base resin of the sealant 600, an acrylate-based resin, an epoxy-based resin, a urethane-based resin, a phenolic resin, or any mixture thereof can be used. In one embodiment, the base resin may be an acrylate-based resin, and the acrylate-based resin may be a polymer of acrylic monomers. The acrylic monomer may be, for example, a polyfunctional acrylate. In some embodiments, the sealant 600 may further contain a monomeric component as well as the base resin. The monomeric component may be, for example, a monofunctional acrylate. As used herein, a monofunctional acrylate may refer to a compound having one acrylic group, and a polyfunctional acrylate may refer to a compound having two or more acrylic groups. The curable resin may be cured by irradiation with ultraviolet light or heating. The ultraviolet irradiation conditions or heating conditions may be set as appropriate within a range that does not prevent the obj ectives of the present disclosure from being achieved. The sealant 600 may further contain an initiator, such as a photoinitiator or a thermal initiator, if desired.

The sealant 600 may be formed by typical methods used in the art and may be formed. Foror example, the sealant 600 may be drawn on the periphery (i.e., inactive regions) of the liquid crystal layer with the use of a dispenser having a nozzle.

The spacer may include at least one of a ball spacer and a column spacer, and is particularly preferably a ball spacer. The ball spacer may be one or more ball spacers. The ball spacer preferably has a diameter of 1 to 10 µn. The area occupied by the ball spacer in the liquid crystal layer 300 when viewed in an in-plane direction is preferably 0.01% to 10% with respect to the area of the liquid crystal layer 300, in terms of improving the visibility and the transmittance in transmissive mode.

In one embodiment, the liquid crystal layer 300 may further include an orientation film 400 (see FIG. 3) as needed. For example, the orientation film 400 may be formed on both sides of the liquid crystal layer 300 containing a liquid crystal compound.

The orientation film 400 is not particularly limited as long as it can cause the liquid crystal compound to be oriented. For example, the orientation film 400 may be formed by applying and curing an orientation film coating composition including an orientable polymer, a photopolymerization initiator, and a solvent. The orientable polymer may be, without limitation, a polyacrylate-based resin, a polyamic acid resin, a polyimide-based resin, a polymer having a cinnamate group, or the like, and any polymer capable of exhibiting orientation, whether conventionally known or hereafter developed, may be used.

The transmittance-variable optical laminate of the present disclosure may further include additional members as long as the presence of the members does not prevent the objectives of the present disclosure from being achieved. For example, the additional members may include a mucoadhesive layer 500 (see FIG. 3B), or the additional members may include an ultraviolet absorbing layer, a hard coating layer, and the like.

The adhesive layer 500 may be made from an adhesive or adhesive agent, and is preferably transparent and thermally stable while having an adequate adhesive force to prevent delamination, generation of bubbles, and the like from occurring during handling of the optical laminate.

The adhesive may be any conventional or to-be-developed adhesive. For example, the adhesive may be a photocurable adhesive.

The photocurable adhesive is crosslinked and cured by receiving an active energy beam such as ultraviolet (UV) or electron beam (EB) to exhibit strong adhesion, and may contain a reactive oligomer, a reactive monomer, a photopolymerization initiator, and the like.

The reactive oligomer is an important component that determines the properties of the adhesive, and the reactive oligomer forms a polymeric bond through a photopolymerization reaction, thereby forming a cured film. The reactive oligomers that can be used include polyester-based resins, polyether-based resins, polyurethane-based resins, epoxy-based resins, polyacrylic resins, silicone-based resins, and the like.

The reactive monomer acts as a crosslinker and diluent and affects the adhesive properties of the aforementioned reactive oligomers. The reactive monomers that can be used include monofunctional monomers, polyfunctional monomers, epoxy-based monomers, vinyl ethers, cyclic ethers, etc.

The photopolymerization initiator absorbs light energy and generates radicals or cations to initiate photopolymerization, and the photopolymerization initiator can be selected depending on the photopolymerization resin.

The adhesive may be any conventional or to-be-developed adhesive. In one or more embodiments, an acrylic-based adhesive, a rubber-based adhesive, a silicone-based adhesive, a urethane-based adhesive, a polyvinyl alcohol-based adhesive, a polyvinylpyrrolidone-based adhesive, a polyacrylamide-based adhesive, a cellulose-based adhesive, a vinyl alkyl ether-based adhesive, and the like may be used. The adhesive agent may be an acrylic-based adhesive agent, which is preferred in terms of ease of availability and the like, although it is not particularly limited as long as it has adhesion and viscoelasticity. For example, the adhesive agent may contain a (meth)acrylate copolymer, a crosslinking agent, and a solvent.

The crosslinking agent may be any conventional or to-be-developed crosslinking agent. For example, a polyisocyanate compound, an epoxy resin, a melamine resin, a urea resin, a dialdehyde resin, a methylolpolymer, or the like may be used as the crosslinking agent. Preferably, a polyisocyanate compound may be used.

The solvent may be a conventional solvent commonly used in the field of resin compositions. For example, the solvent may be selected from alcohol-based compounds such as methanol, ethanol, isopropanol, butanol, propylene glycol methoxy alcohol; ketone-based compounds such as methylethyl ketone, methylbutyl ketone, methylisobutyl ketone, diethyl ketone, dipropyl ketone, etc; acetate-based compounds such as methyl acetate, ethyl acetate, butyl acetate, propylene glycol methoxyacetate; cellosolve-based compounds such as methyl cellosolve, ethyl cellosolve, propyl cellosolve; and hydrocarbon-based compounds such as hexane, heptane, benzene, toluene, xylene, etc. These may be used solely or in combination.

The thickness of the adhesive layer 500 may be suitably determined depending on the type of resin serving as the adhesive, the strength of the adhesive, the environment in which the adhesive is utilized, and the like. In one embodiment, the adhesive layer may have a thickness of 0.01 to 50 µm, preferably a thickness of 0.05 to 20 µm, and more preferably a thickness of 0.1 to 10 µm, in order to ensure sufficient adhesion and minimize the thickness of the optical laminate.

In one embodiment, the adhesive layer 500 may be formed on one or both sides of the polarizing plate by a laminate method.

The UV absorbing layer is not particularly limited, provided that it is intended to prevent degradation of the optical laminate under ultraviolet radiation. The UV absorbing layer may be formed from, for example, a salicylic acid-based UV absorber (phenylsalicylate, p-tert-butylsalicylate, etc.), a benzophenone-based UV absorber (2,4-dihydroxybenzophenone, 2,2'-dihydroxy-4,4'-dimethoxybenzophenone, etc.), a benzotriazole-based UV absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl )-5-chlorobenzotriazole, 2-(2'-hydroxy-3'-tert-butyl-5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzo triazol-2-yl)-6-(linear and branched dodecyl)-4-methylphenol, and a mixture of octyl-3-[3-tert-butyl-4-hydroxy-5-(chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate), a cyanoacrylate-based UV absorber (2'-ethylhexyl-2-cyano-3,3-diphenylacrylate, ethyl-2-cyano-3-(3',4'-methylenedioxyphenyl)-acrylate, etc.), a triazine-based ultraviolet absorber, and the like can be used. Preferably, benzotriazole-based ultraviolet absorbers or triazine-based ultraviolet absorbers that have high transparency and excellent effectiveness in preventing deterioration of polarizing plates or transmittance-variable layers are used. Benzotriazole-based ultraviolet absorbers with more appropriate spectral absorption spectra are particularly preferred. The benzotriazole-based UV absorber may also be bis. For example, the benzotriazole-based UV absorber may be 6,6'-methylenebis(2-(2H-benzo[d][1,2,3]triazol-2-yl)-4-(2,4,4-trimethylpentan-2-yl)phenol), 6,6'-methylenebis(2-(2H-benzo[d][1,2,3]triazol-2-yl)-4-(2-hydroxyethyl)phenol), or the like.

The hard coating layer is not particularly limited as long as it can protect the polarizing plate, transmittance variable layer, and the like from external physical and chemical impacts, and any conventional or to-be-developed hard coating materials may be used.

In one embodiment, the hard coating layer may be formed by applying a composition for forming a hard coating layer on a certain member, followed by curing by light or heat. The composition for forming the hard coating layer is not particularly limited, and the composition may contain a photocurable compound and a photoinitiator.

As the photocurable compound and photoinitiator, those commonly used in the art may be used without particular limitation. For example, the photocurable compounds may be photopolymerizable monomers, photopolymerizable oligomers, and the like. Alternatively, the photocurable compounds may be monofunctional and/or polyfunctional (meth)acrylates. The photoinitiator may be oxime-based.

Aside from the transmittance-variable optical laminate, the present disclosure also relates to a smart window including the transmittance-variable optical laminate. The present disclosure also relates to a vehicle including the smart window applied to at least one of a front window, a rear window, a side window, a sunroof window, and an interior partition, and relates to a building window including the smart window.

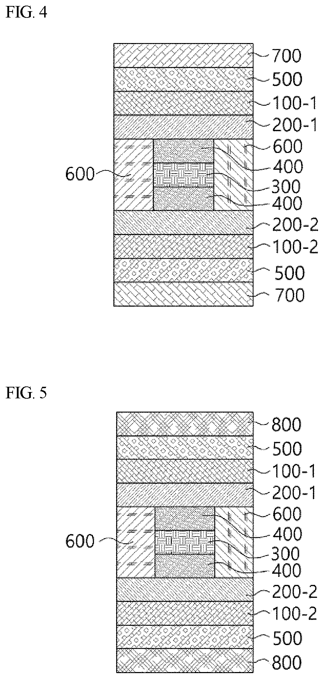

For example, a vehicle with the smart window of the present disclosure may be an automotive glass 700 bonded on both sides of an optical laminate composed of a polarizing 100, a transparent conductive layer 200, a liquid crystal layer 300, an orientation film 400, an adhesive layer 500, and a sealant 600 (see FIG. 4). For example, it may be manufactured by placing an adhesive film and an automotive glass on both sides of the optical laminate, and then heating the resulting structure for 10 to 20 minutes at a temperature of 90°C in a vacuum state of about 1 bar using a press machine, in which the adhesive films may include an EVA film, a PVB film, and the like.

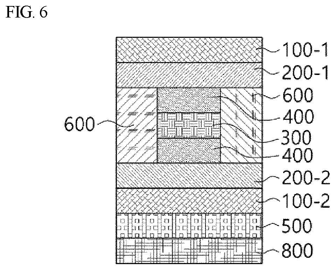

In addition, the building window (window glass 800) may be bonded on both sides (see FIG. 5) or one side (see FIG. 6) of the optical laminate. The window glass may be bonded on both sides of the optical laminate after a UV adhesive is applied and UV-cured on the surfaces of the optical laminate to produce a smart window product having the same configuration as in FIG. 5. The window glass may be laminated on one side of the optical laminate by an optical lamination process to produce a smart window product having the same configuration as in FIG. 6.

### Mode for Invention

Hereinafter, specific embodiments of the present disclosure will be described. The present disclosure may, however, be embodied in many different forms and should not be construed as being limited to the embodiments or examples described herein. Rather, these embodiments or examples are provided so that the present disclosure will be thorough and complete and will fully convey the concept of the disclosure to those skilled in the art. Thus, the present disclosure will be defined only by the scope of the appended claims.

### Preparation Example: Fabrication of Polarizing Plate

### (1) Swelling treatment process

A polyvinyl alcohol film (fabric film) with a thickness of 60 µm (manufactured by Kabushikigaisha Kuraray, trade name "KURARAY POVAL FILM VF-PE#6000", average polymerization degree of 2400, saponification degree of 99.9 mol%) was continuously unwound from a roll of fabric and conveyed to a machine, and was dipped in a swelling bath filled with 20°C pure water. In this swelling process, inter-roll stretching (longitudinal uniaxial stretching) was performed with a main speed difference between the nip rollers. A stretch factor of 2.5x based on the fabric film was set.

### (2) Dying treatment process

The film passing between the nip rollers was treated with pure water/potassium iodide/iodine/boric acid (mass ratio of 100/2/0.01/0.3) in a dye bath at 30°C for 120 seconds. In this dying state, inter-rolling stretching (longitudinal uniaxial stretching) with a main speed difference between the nip rollers was performed. A stretch factor of 1.1x based on the film having undergone the swelling process was set.

### (3) Crosslinking treatment process

The film was then passed between the nip rollers, and was treated with pure water/potassium iodide/boric acid (mass ratio of 100/12/4) in a first crosslinking bath at 56°C for 70 seconds. Inter-roll stretching (longitudinal uniaxial stretching) was performed by applying the main speed difference between the nip rollers provided between first and second crosslinking baths. A stretch factor of 1.9x based on the film having undergone the dying process was set.

### (4) Complementary color treatment process

The film having undergone the crosslinking treatment was treated with potassium iodide/boric acid/pure water (mass ratio of 9/2.9/100) in a second crosslinking bath at 40°C for 10 seconds.

### (5) Cleaning treatment process

The film having undergone the second crosslinking treatment was then dipped in a cleaning bath containing pure water of 14°C for 5 seconds and cleaned at a shower volume of 5 m^{3/}h and a shower temperature of 14°C.

Since a [PVA⁺I₃⁻] complex, which absorbs short-wavelength light, is weak in water, the value of the single transmittance color b* considerably varies depending on the cleaning solution temperature, retention time, shower volume, shower temperature, and PVA moisture content.

### (6) Drying treatment process

The film having undergone the cleaning process was then passed through a drying furnace so that the film was heated and dried at a temperature of 80°C for 190 seconds to produce a polarizer film. After the drying the moisture content was 13.6%, and the thickness of the obtained polarizer film was about 21 µm.

### (7) Bonding treatment process

A water-based adhesive containing 5 parts of polyvinyl alcohol and 100 parts of water was prepared. Next, a protective film was laminated on each of the surfaces of the polarizer film using the prepared UV adhesive. The resulting laminates were exposed to UV so that the adhesive could be cured. Thus, polarizing plates were obtained. The thickness of the adhesive layer in the obtained polarizing plate was about 2 µm.

### Examples and Comparative Examples: Fabrication of Optical Laminate

### Example 1

A polarizing plate was manufactured in the same manner as in the preparation example described above, except that the cleaning and shower temperature of the cleaning treatment process was changed to 8°C, the retention time was changed to 30 seconds, the shower volume was changed to 6.5 m³/h, and the PVA moisture content after the drying was changed to 25.8%.

The polarizer was then placed in a roll-to-roll sputtering device (manufactured by SNTEK Inc.), the sputter gun of the device was operated by applying 450 W DC power, and then plasma was induced on an ITO (10 wt% Sn doped In₂O₃) target to form a 44-nm thick transparent conductive layer. As a results, upper and lower laminated structures having a structure in which a polarizing plate and a transparency conductor layer were stacked were fabricated. The transparent conductive layers formed in the upper and lower laminated structures were ionized by operating the ion gun with the application of 50W DC power. The roll-to-roll process was performed at room temperature, a pressure of 3 mTorr, and a rolling speed of 1 cm/sec while argon gas and oxygen gas were supplied at 30 sccm and 1 sccm, respectively. The ITO thickness was measured with FT-SEM, and the ITO sheet resistance (Ω/□) was measured with a four point probe.

An orientation film was then formed on the ITO surface of each of the upper and lower laminated structures, and a sealant was applied to the ITO surface of the lower laminated structure using a sealant dispenser, depending on the product size. Next, the upper and lower polarizing plates were arranged such that the polarization axes thereof were parallel to each other in a direction of 0° or 90°, the upper and lower laminated structures were joined while liquid crystals were injected onto the orientation film of the lower laminated structure through an ODF process to fabricate the transmittance-variable optical laminate of Example 1.

### Example 2

A transmittance-variable optical laminate of Example 2 was manufactured in the same manner as in Example 1, except that the cleaning and shower temperature of the cleaning treatment process was changed to 3°C, the retention time was changed to 55 seconds, the shower volume was changed to 8 m³/h, the PVA moisture content after the drying was changed to 28.5%, and the thickness of the transparent conductive layer was changed to 58 nm.

### Example 3

A transmittance-variable optical laminate of Example 3 was manufactured in the same manner as in Example 1, except that the cleaning and shower temperature of the cleaning treatment process was changed to 5°C, the retention time was changed to 50 seconds, the shower volume was changed to 7.7 m³/h, the PVA moisture content after the drying was changed to 27.6%, and the thickness of the transparent conductive layer was changed to 54 nm.

### Example 4

A transmittance-variable optical laminate of Example 4 was manufactured in the same manner as in Example 1, except that the cleaning and shower temperature of the cleaning treatment process was changed to 6°C, the retention time was changed to 45 seconds, the shower volume was changed to 7.4 m³/h, the PVA moisture content after the drying was changed to 27.2%, and the thickness of the transparent conductive layer was changed to 51 nm.

### Example 5

A transmittance-variable optical laminate of Example 5 was manufactured in the same manner as in Example 1, except that the cleaning and shower temperature of the cleaning treatment process was changed to 7°C, the retention time was changed to 40 seconds, the shower volume was changed to 7.1 m³/h, the PVA moisture content after the drying was changed to 26.6%, and the thickness of the transparent conductive layer was changed to 48 nm.

### Example 6

A transmittance-variable optical laminate of Example 6 was manufactured in the same manner as in Example 1, except that the cleaning and shower temperature of the cleaning treatment process was changed to 6°C, the retention time was changed to 35 seconds, the shower volume was changed to 6.8 m³/h, the PVA moisture content after the drying was changed to 26.2%, and the thickness of the transparent conductive layer was changed to 45 nm.

### Example 7

A transmittance-variable optical laminate of Example 7 was manufactured in the same manner as in Example 1, except that the cleaning and shower temperature of the cleaning treatment process was changed to 9°C, the retention time was changed to 30 seconds, the shower volume was changed to 6.5 m³/h, the PVA moisture content after the drying was changed to 25.3%, and the thickness of the transparent conductive layer was changed to 42 nm.

### Example 8

A transmittance-variable optical laminate of Example 8 was manufactured in the same manner as in Example 1, except that the cleaning and shower temperature of the cleaning treatment process was changed to 10°C, the retention time was changed to 25 seconds, the shower volume was changed to 6.2 m³/h, the PVA moisture content after the drying was changed to 25.1%, and the thickness of the transparent conductive layer was changed to 40 nm.

### Example 9

A transmittance-variable optical laminate of Example 9 was manufactured in the same manner as in Example 1, except that the cleaning and shower temperature of the cleaning treatment process was changed to 1 1°C, the retention time was changed to 20 seconds, the shower volume was changed to 5.9 m³/h, the PVA moisture content after the drying was changed to 24.5%, and the thickness of the transparent conductive layer was changed to 37 nm.

### Example 10

A transmittance-variable optical laminate of Example 10 was manufactured in the same manner as in Example 1, except that the cleaning and shower temperature of the cleaning treatment process was changed to 12°C, the retention time was changed to 15 seconds, the shower volume was changed to 5.6 m³/h, the PVA moisture content after the drying was changed to 24%, and the thickness of the transparent conductive layer was changed to 34 nm.

### Example 11

A transmittance-variable optical laminate of Example 11 was manufactured in the same manner as in Example 1, except that the cleaning and shower temperature of the cleaning treatment process was changed to 13°C, the retention time was changed to 10 seconds, the shower volume was changed to 5.3 m³/h, the PVA moisture content after the drying was changed to 23.5%, and the thickness of the transparent conductive layer was changed to 30 nm.

### Comparative Example 1

A transmittance-variable optical laminate of Comparative Example 1 was manufactured in the same manner as in Example 1, except that the polarizing plate of the preparation example was used.

### Comparative Example 2

A transmittance-variable optical laminate of Comparative Example 2 was manufactured in the same manner as in Comparative Example 1, except that the thickness of the transparent conductive layer was changed to 58 nm.

### Comparative Example 3

A transmittance-variable optical laminate of Comparative Example 3 was manufactured in the same manner as in Comparative Example 1, except that the thickness of the transparent conductive layer was changed to 30 nm.

### Experimental Example: Evaluation of Optical Characteristics

For the optical laminates of Examples 1 to 11 and the optical laminates of Comparative Examples 1 to 3, and the polarizing plates and laminated structures included in the optical laminates, the transmittance and single transmittance colors a* and b* were measured with a spectrophotometer (CM-3700d, Konica Minolta). The measurement results are shown in Tables 1 to 3 below.

**[Table 1]**

| Classification | Upper | | | | | | | |
|---|---|---|---|---|---|---|---|---|
| | polarizing plate | | | laminated structure (polarizing plate/transparent conductive layer) | | | | |
| Characteristics | Transmitta nce (%) | Front surface | | ITO thickness (nm) | Sheet resistance (Ω/□) | Transmittan ce (%) | Front surface | |
| | | a* | b* | | | | a* | b* |
| Example 1 | 43.57 | -0.7 | -4.2 | 44 | 150 | 38.28 | -1.1 | 0.0 |
| Example 2 | 43.48 | -0.7 | -5.0 | 58 | 50 | 36.14 | -1.1 | 0.0 |
| Example 3 | 43.52 | -0.7 | -4.7 | 54 | 81 | 36.75 | -1.2 | 0.0 |
| Example 4 | 43.63 | -0.7 | -4.6 | 51 | 101 | 37.21 | -1.1 | 0.0 |
| Example 5 | 43.62 | -0.7 | -4.4 | 48 | 120 | 37.67 | -1.0 | 0.0 |
| Example 6 | 43.57 | -0.7 | -4.3 | 45 | 141 | 38.12 | -1.0 | 0.0 |
| Example 7 | 43.50 | -0.7 | -4.1 | 42 | 162 | 38.58 | -1.1 | 0.0 |
| Example 8 | 43.48 | -0.7 | -4.0 | 40 | 181 | 38.89 | -1.1 | 0.0 |
| Example 9 | 43.55 | -0.7 | -3.8 | 37 | 202 | 39.35 | -1.0 | 0.0 |
| Example 10 | 43.58 | -0.7 | -3.7 | 34 | 225 | 39.81 | -1.1 | 0.0 |
| Example 11 | 43.61 | -0.7 | -3.5 | 30 | 252 | 40.42 | -1.2 | 0.0 |
| Comparative Example 1 | 42.13 | -1.3 | 3.6 | 44 | 150 | 37.47 | -1.1 | 6.2 |
| Comparative Example 2 | 42.33 | -1.3 | 3.6 | 58 | 50 | 34.99 | -1.1 | 9.7 |
| Comparative Example 3 | 42.21 | -1.3 | 3.6 | 30 | 252 | 39.02 | -1.2 | 8.2 |
| Comparative Example 4 | 43.54 | -0.7 | -2.0 | 5 | 452 | 36.72 | -1.0 | 0 |
| Comparative Example 5 | 43.61 | -0.7 | -7.0 | 100 | 14 | 37.66 | -1.0 | 0 |

**[Table 2]**

| Classification | Lower | | | | | | | |
|---|---|---|---|---|---|---|---|---|
| | polarizing plate | | | laminated structure (polarizing plate/transparent conductive layer) | | | | |
| Characteristics | Transmitta nce (%) | Front surface | | ITO thickness (nm) | Sheet resistanc e (Ω/□) | Transmittan ce (%) | Front surface | |
| | | a* | b* | | | | a* | b* |
| Example 1 | 43.61 | -0.6 | -4.3 | 44 | 150 | 38.25 | -1.0 | 0.0 |
| Example 2 | 43.52 | -0.6 | -4.9 | 58 | 50 | 36.12 | -1.1 | 0.0 |
| Example 3 | 43.55 | -0.6 | -4.7 | 54 | 81 | 36.64 | -1.0 | 0.0 |
| Example 4 | 43.58 | -0.6 | -4.6 | 51 | 101 | 37.19 | -1.2 | 0.0 |
| Example 5 | 43.56 | -0.6 | -4.3 | 48 | 121 | 37.62 | -1.1 | 0.0 |
| Example 6 | 43.63 | -0.6 | -4.2 | 46 | 141 | 38.14 | -1.1 | 0.0 |
| Example 7 | 43.57 | -0.6 | 4.0 | 43 | 162 | 38.64 | -1.0 | 0.0 |
| Example 8 | 43.49 | -0.6 | 4.0 | 40 | 181 | 38.92 | -1.2 | 0.0 |
| Example 9 | 43.62 | -0.6 | -3.8 | 37 | 203 | 39.34 | -1.2 | 0.0 |
| Example 10 | 43.54 | -0.6 | -3.6 | 34 | 225 | 39.85 | -1.1 | 0.0 |
| Example 11 | 43.53 | -0.6 | -3.4 | 30 | 252 | 40.47 | -1.0 | 0.0 |
| Comparative Example 1 | 42.15 | -1.2 | 3.2 | 40 | 150 | 37.13 | -1.1 | 6.0 |
| Comparative Example 2 | 42.05 | -1.2 | 3.2 | 58 | 50 | 34.65 | -1.1 | 9.7 |
| Comparative Example 3 | 42.13 | -1.2 | 3.2 | 30 | 252 | 38.44 | -1.0 | 8.2 |
| Comparative Example 4 | 43.56 | -0.6 | -2.1 | 5 | 452 | 36.58 | -1.1 | 0 |
| Comparative Example 5 | 43.60 | -0.6 | -7.2 | 101 | 14 | 37.83 | -1.1 | 0 |

**[Table 3]**

| Classification | Transmittance-variable optical laminate | | |
|---|---|---|---|
| Characteristics | Transmittance (%) | Front surface | |
| | | a* | b* |
| Example 1 | 34.05 | -3.2 | 6.5 |
| Example 2 | 32.10 | -3.3 | 6.5 |
| Example 3 | 32.53 | -3.1 | 6.5 |
| Example 4 | 33.07 | -3.3 | 6.5 |
| Example 5 | 33.57 | -3.3 | 6.5 |
| Example 6 | 34.24 | -3.2 | 6.5 |
| Example 7 | 34.75 | -3.1 | 6.5 |
| Example 8 | 34.88 | -3.3 | 6.5 |
| Example 9 | 3527 | -3.3 | 6.5 |
| Example 10 | 35.92 | -3.2 | 6.5 |
| Example 11 | 36.38 | -3.2 | 6.5 |
| Comparative Example 1 | 32.49 | -3.2 | 14.3 |
| Comparative Example 2 | 30.48 | -3.2 | 19.5 |
| Comparative Example 3 | 34.56 | -3.1 | 16.5 |
| Comparative Example 4 | 32.49 | -3.1 | 6.5 |
| Comparative Example 5 | 33.92 | -3.3 | 6.5 |

Referring to Tables 1 to 3 above, the laminated structures (polarizing plate/transparent conductive layer) of Examples 1 to 11, each including a polarizing plate having a single transmittance color b* value of -6.0 to -3.0 has a single transmittance color b* value of 0, and optical laminates including the laminated structure has a single transmittance color b* value of 6.5.

Meanwhile, the laminated structures (polarizing plate/transparent conductive layer) of Comparative Examples 1 to 3, each including a polarizing plate with a single transmittance color b* value of 3.2 or 3.6 has a single transmittance color b* value of 6.2 to 9.7, and optical laminates including the laminated structure has a single transmittance color b* value of 14.3 to 19.5.

That is, it is seen that the optical laminate of the example in which the single transmittance color b* value of the polarizing plate satisfies a range of from -6.0 to -3.0 reduces the phenomenon of a specific color tint caused by the electrode material, thereby facilitating the expression of neutral colors in transmissive mode.

In addition, the laminated structure (polarizing plate/transparent conductive layer) of Comparative Example 4, which includes a polarizing plate with a single transmittance color b* value of -2.1 or -2.0, has a sheet resistance value of 452 Ω/□, and the laminated structure (polarizing plate/transparent conductive layer) of Comparative Example 5, which includes a polarizing plate with a single transmittance color b* value of -7.2 or -7, has a sheet resistance value of 14 Ω/□.When the sheet resistance is excessively high, a large drive voltage is required continuously, which reduces the power efficiency and safety of the product and reduces the durability of the material. When the sheet resistance is extremely low, the range of transmittance variations that provide the required blinding effect is significantly reduced, and the cost of the material increases.

Therefore, it is seen that the optical laminate of the example in which the polarizing plate satisfies a single transmittance color b* value of -6.0 to -3.0 has an advantage in terms of driving the optical laminate.

### Industrial Applicability

The transmittance-variable optical laminate according to the present disclosure features that the single transmittance color of the polarizing plates is adjustable, thereby significantly reducing the phenomenon of a yellowing tint attributable to the electrode material compared to conventional optical laminates.

## Claims

1. A transmittance-variable optical laminate comprising:
a first polarizing plate;
a first transparent conductive layer formed on a first surface of the first polarizing plate;
a second polarizing plate arranged to be opposite the first polarizing plate;
a second transparent conductive layer formed on a first surface of the second polarizing plate and arranged to be opposite the first transparent conductive layer, and
a liquid crystal layer provided between the first transparent conductive layer and the second transparent conductive layer,
wherein at least one transparent conductive layer of the first and second transparent conductive layers is formed in direct contact with any one of the first and second polarizing plates, and at least one polarizing plate of the first and second polarizing plates has a single transmission color b* value of -6.0 to -3.0.

2. The transmittance-variable optical laminate of claim 1, wherein at least one polarizing plate of the first and second polarizing plates has a single transmittance color b* value of -5 to -3.5.

3. The transmittance-variable optical laminate of claim 1, wherein at least one polarizing plate of the first and second polarizing plates comprises at least one functional layer selected from the group consisting of a protective layer, a phase control layer, and a refractive index control layer.

4. The transmittance-variable optical laminate of claim 1, wherein at least one polarizing plate of the first and second polarizing plates has a thickness of 30 to 200 µm.

5. The transmittance-variable optical laminate of claim 1, wherein at least one transparent conductive layer of the first and second transparent conductive layers has a thickness of 20 to 70 nm.

6. The transmittance-variable optical laminate of claim 1, wherein at least one transparent conductive layer of the first and second transparent conductive layers has a sheet resistance value of 30 to 70 Ω/□.

7. The transmittance-variable optical laminate of claim 1, wherein at least one transparent conductive layer of the first and second transparent conductive layers is formed in direct contact with either of the first and second polarizing plates, without a separate substrate interposed therebetween.

8. The transmittance-variable optical laminate of claim 1, wherein at least one transparent conductive layer of the first and second transparent conductive layers is formed in direct contact with either of the first and second polarizing plates, with an adhesion-aiding layer interposed therebetween.

9. The transmittance-variable optical laminate of claim 1, wherein at least one transparent conductive layer of the first and second transparent conductive layers comprises one or more materials selected from the group consisting of transparent conductive oxides, metals, carbon-based materials, conductive polymers, conductive inks, and nanowires.

10. The transmittance-variable optical laminate of claim 1, wherein the liquid crystal layer comprises at least one type selected from the group consisting of a ball spacer and a column spacer.

11. The transmittance-variable optical laminate of claim 10, wherein the ball spacer has a diameter of 1 to 10 µm.

12. The transmittance-variable optical laminate of claim 10, wherein the ball spacer occupies 0.01% to 10% of the area of the liquid crystal layer.

13. The transmittance-variable optical laminate of claim 1, further comprising at least one selected from the group consisting of an orientation film, an adhesive layer, an ultraviolet absorbing layer, and a hard coating layer.

14. A method of manufacturing the transmittance-variable optical laminate of any one of claims 1 to 13.

15. A smart window comprising the transmittance-variable optical laminate of any one of claims 1 to 13.

16. An automobile comprising the smart window of claim 15 applied to at least one selected from a front window, a rear window, a side window, a sunroof window, and an interior partition.

17. A window for a building, the window comprising the smart window of claim 15.
